# EUROPEAN PATENT SPECIFICATION

(11) **EP 3 967 589 B1**
(45) Date of publication and mention of the grant of the patent: **06.11.2024**
(21) Application number: 19927813.6
(22) Date of filing: 30.10.2019
(51) Int. Cl.: B62M 6/50, B60B 27/00, B62J 45/411, G01L 3/14, G01L 5/22, G01L 3/10, B62M 6/65

(54) **DYNAMIC TORQUE SENSING DEVICE OF THREAD-ON FREEWHEEL STRUCTURE**
DYNAMISCHE DREHMOMENTERFASSUNGSVORRICHTUNG EINER GEWINDEFREILAUFSTRUKTUR
DISPOSITIF DE DÉTECTION DE COUPLE DYNAMIQUE D'UNE STRUCTURE DE ROUE LIBRE À FILETAGE

(30) Priority: 05.05.2019 CN 201920625117 U
(43) Date of publication of application: 16.03.2022
(73) Proprietor: KClamber Electric Technology Corp, Taicang, Jiangsu 215400 (CN)
(72) Inventor: KANG, Xianbing, Suzhou, Jiangsu 215400 (CN)
(74) Representative: Buzzi, Notaro & Antonielli d'Oulx S.p.A.
(86) International application number: PCT/CN2019/114277
(87) International publication number: WO 2020/224202

(56) References cited:
- EP-A1- 3 912 897
- CN-A- 106 627 964
- CN-A- 109 421 882
- CN-A- 109 572 916
- CN-A- 109 572 916
- CN-A- 109 649 569
- CN-U- 203 581 299
- CN-U- 207 603 394
- US-A1- 2014 202 262
- US-A1- 2014 202 262

## Description

### TECHNICAL FIELD

The present application relates to the application field of torque sensors, for example, a dynamic torque sensing device of a thread-on freewheel structure.

### BACKGROUND

With an increasingly high requirement on intelligent travel, a torque sensor is more and more favored by people. At present, the torque sensor is more and more inclined to be arranged inside a motor so that wiring and assembly of a whole vehicle are simpler and more beautiful. For example, Chinese Patent Application No. 2017214339570 published on Jul. 10, 2018 provides a motor having a built-in dynamic torque sensing and measuring device, where a dynamic torque sensor is arranged inside the motor. However, this technical solution has the following problem: after the sensor is assembled into the whole vehicle, a signal variation of the torque sensor will be affected by human bodies with different weights and different rotation angles of the sensor during people's riding of an electric bicycle so that the sensor cannot truly reflect the strength of pedaling.

CN109572916A (KUNSHAN KCLAMBER ELECTRONIC TECH CO LTD, April 5, 2019) discloses a torque and speed sensing device which includes a freehub body 2 and a freehub fixed housing 1 connected to a freewheel 50, where the freehub body 2 includes a torque sensing deformation unit 203, a load connection portion 204, and a freehub locking bracket body connection portion 206. The freehub locking bracket body connection portion 206 is connected to the freehub locking bracket body 3. A bearing is held in the freehub locking bracket body 3, and another bearing is held in the load connection portion 204.

### SUMMARY

The present application provides a dynamic torque sensing device of a thread-on freewheel structure. Since the device is not affected by the weight of a human body and the weight of a whole vehicle, the device can truly reflect the strength of pedaling.

A dynamic torque sensing device of a thread-on freewheel structure includes a thread-on freewheel sensing body, a fixed housing and a sensor, where the thread-on freewheel sensing body and the fixed housing are rotatable relative to each other, and the sensor is configured to sense a torque of the thread-on freewheel sensing body.

The thread-on freewheel sensing body includes a thread-on freewheel sensing body relative fixing portion, a thread-on freewheel sensing body relative rotating portion and a thread-on freewheel sensing body transition portion, where the thread-on freewheel sensing body relative fixing portion, the thread-on freewheel sensing body transition portion and the thread-on freewheel sensing body relative rotating portion are sequentially arranged along an axial direction of the thread-on freewheel sensing body, and the thread-on freewheel sensing body transition portion is configured to connect the thread-on freewheel sensing body relative fixing portion to the thread-on freewheel sensing body relative rotating portion.

The thread-on freewheel sensing body relative fixing portion, the thread-on freewheel sensing body relative rotating portion and the thread-on freewheel sensing body transition portion are coaxial annular structures.

An inner cavity of the thread-on freewheel sensing body relative fixing portion is provided with a bearing.

An inner cavity of the thread-on freewheel sensing body relative rotating portion is provided with a bearing.

The sensor is a deformation sensing sensor which is disposed in the thread-on freewheel sensing body transition portion.

The sensor includes a torque sensing Hall and a torque sensing magnet; where the torque sensing Hall and the torque sensing magnet are disposed in the thread-on freewheel sensing body relative fixing portion and the thread-on freewheel sensing body relative rotating portion respectively, or the torque sensing Hall and the torque sensing magnet are disposed in the thread-on freewheel sensing body relative rotating portion and the thread-on freewheel sensing body relative fixing portion respectively.

The dynamic torque sensing device of the thread-on freewheel structure further includes an inductor primary control circuit and an inductor secondary control circuit.

The inductor primary control circuit is fixed to the fixed housing and provided with an infrared receiving element; and the inductor secondary control circuit is connected to the thread-on freewheel sensing body and provided with an infrared emitting element.

The dynamic torque sensing device of the thread-on freewheel structure further includes a primary induction coil and a secondary induction coil, where the primary induction coil is electrically connected to the inductor primary control circuit, and the secondary induction coil is electrically connected to the inductor secondary control circuit.

The dynamic torque sensing device of the thread-on freewheel structure further includes two electromagnetic shields, where the two electromagnetic shields are disposed on an outer side of the secondary induction coil and an outer side of the primary induction coil respectively.

The sensor is electrically connected to the inductor secondary control circuit.

An outer surface of the fixed housing is provided with a signal line hole, and a signal line is electrically connected to the inductor primary control circuit through the signal line hole. Two ends of the thread-on freewheel sensing body are connected to an axle shaft through the bearings, and an inner surface of a hole of the fixed housing mating with the axle shaft is provided with a fixed housing positioning portion.

The dynamic torque sensing device of the thread-on freewheel structure provided by the present application is designed as a modular device. The structure of the thread-on freewheel sensing body is improved so that the thread-on freewheel sensing body transition portion is not affected by the weight of the human body and the weight of the whole vehicle, and thus the device can truly reflect the strength of pedaling. The device has a simpler structure and can be assembled to a rear motor or a rear hub of a bicycle with higher versatility.

### BRIEF DESCRIPTION OF DRAWINGS

FIG. 1 is a structure view of a dynamic torque sensing device of a thread-on freewheel structure according to an embodiment of the present application.
FIG. 2 is a schematic view of FIG. 1 from another angle.
FIG. 3 is a partial structure view of FIG. 1.
FIG. 4 is an exploded view of a dynamic torque sensing device of a thread-on freewheel structure according to an embodiment of the present application.
FIG. 5 is a sectional view of a dynamic torque sensing device of a thread-on freewheel structure according to an embodiment of the present application.
FIG. 6 is a schematic view of an installation mode of a dynamic torque sensing device of a thread-on freewheel structure according to an embodiment of the present application.
FIG. 7 is a schematic view of a usage mode of a dynamic torque sensing device of a thread-on freewheel structure according to an embodiment of the present application.

### Reference list

- 1: thread-on freewheel sensing body
- 101: thread-on freewheel sensing body relative fixing portion
- 102: thread-on freewheel sensing body relative rotating portion
- 103: thread-on freewheel sensing body transition portion
- 104: threaded hole
- 2: fixed housing
- 201: fixed housing positioning portion
- 202: signal line hole
- 3: inductor primary control circuit
- 4: infrared receiving element
- 5: electromagnetic shield
- 6: primary induction coil
- 7: secondary induction coil
- 8: signal line
- 9: inductor secondary control circuit
- 10: infrared emitting element
- 11a: bearing
- 11b: bearing
- 12: sensor
- 20: axle shaft

### DETAILED DESCRIPTION

Technical solutions of the present application are described below in conjunction with drawings and embodiments.

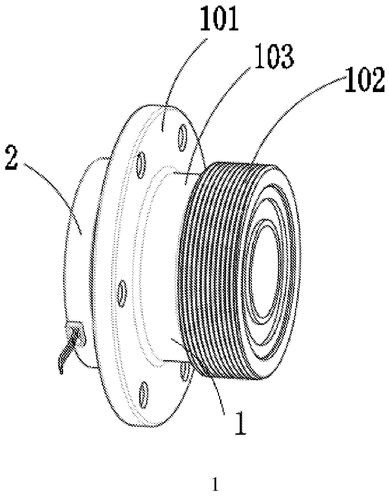

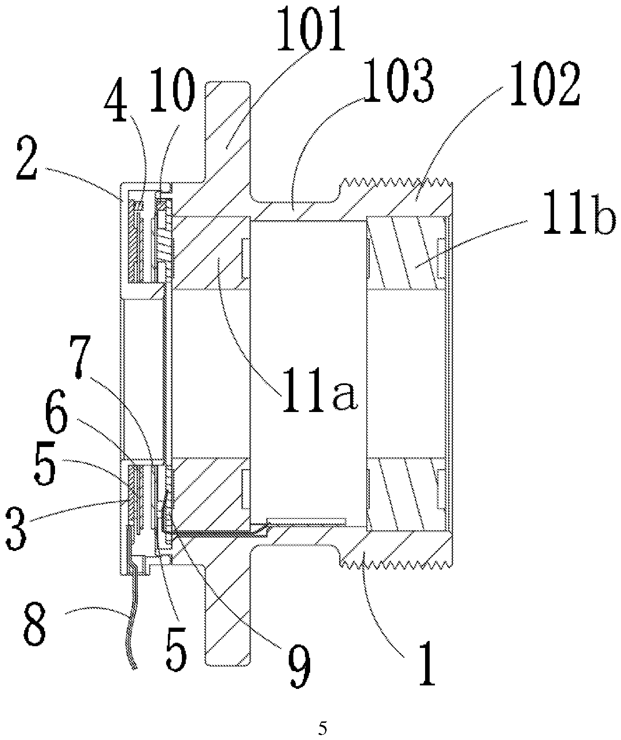

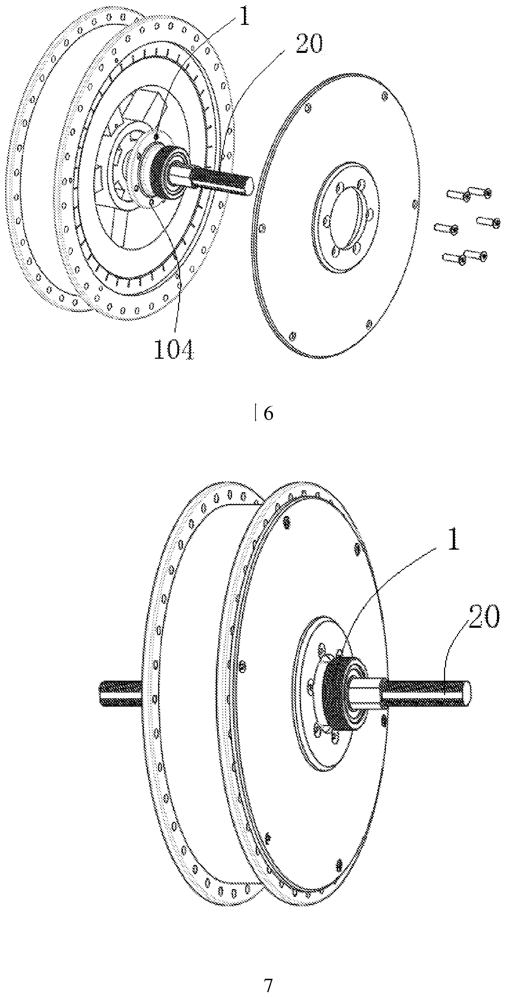

As shown in FIGS. 1 to 7, a dynamic torque sensing device of a thread-on freewheel structure in the present example includes a thread-on freewheel sensing body 1, a fixed housing 2 and a sensor 12. The sensor 12 is configured to sense a torque of the thread-on freewheel sensing body 1. The thread-on freewheel sensing body 1 and the fixed housing 2 are rotatable relative to each other. For example, when the dynamic torque sensing device of the thread-on freewheel structure is disposed on a motor, the thread-on freewheel sensing body 1 is connected to a rotor of the motor and rotates with the rotor of the motor, and the fixed housing 2 is connected to a stator of the motor and relatively fixed and stationary.

The dynamic torque sensing device of the thread-on freewheel structure in the present example may also be disposed on a rear hub of a bicycle, an electric bicycle, fitness equipment or the like.

The thread-on freewheel sensing body 1 includes a thread-on freewheel sensing body relative fixing portion 101, a thread-on freewheel sensing body relative rotating portion 102 and a thread-on freewheel sensing body transition portion 103. The thread-on freewheel sensing body relative fixing portion 101, the thread-on freewheel sensing body relative rotating portion 102 and the thread-on freewheel sensing body transition portion 103 are all annular structures. The thread-on freewheel sensing body relative fixing portion 101, the thread-on freewheel sensing body transition portion 103 and the thread-on freewheel sensing body relative rotating portion 102 are sequentially arranged along an axial direction of the thread-on freewheel sensing body 1, and the thread-on freewheel sensing body transition portion 103 is configured to connect the thread-on freewheel sensing body relative fixing portion 101 to the thread-on freewheel sensing body relative rotating portion 102. An inner cavity of the thread-on freewheel sensing body relative fixing portion 101 is provided with a bearing 11a. An inner cavity of the thread-on freewheel sensing body relative rotating portion 102 is provided with a bearing 11b. The thread-on freewheel sensing body relative fixing portion 101 and the thread-on freewheel sensing body relative rotating portion 102 rotate with the bearing 11a and the bearing 11b, respectively.

When the thread-on freewheel sensing body 1 is subjected to external forces from a weight of a human body, a weight of a whole vehicle, a chain tension and the like, all the external forces received by the thread-on freewheel sensing body relative fixing portion 101 and the thread-on freewheel sensing body relative rotating portion 102 are transmitted to an axle shaft 20 of a rear wheel by the two bearings so that the thread-on freewheel sensing body transition portion 103 is not affected by the external forces from the weight of the human body, the weight of the whole vehicle, the chain tension and the like. The thread-on freewheel sensing body relative fixing portion 101 is provided with threaded holes 104 to be connected to an external rotation mechanism which may be an end cover of the motor or a hub of the rear wheel. In other embodiments, the thread-on freewheel sensing body relative fixing portion 101 may also be connected to the external rotation mechanism through splines or the like. In the present embodiment, the thread-on freewheel sensing body relative rotating portion 102 is provided with a thread on its outer surface and connected to an external load as a load connection portion, where the load may be a thread-on freewheel. In other embodiments, the thread-on freewheel sensing body relative rotating portion 102 may also be connected to the external load through splines or the like.

In the present embodiment, the sensor 12 is a deformation sensing sensor which is disposed in the thread-on freewheel sensing body transition portion 103. The deformation sensing sensor may be a resistive strain gauge.

In other embodiments, the sensor 12 may be a combination of a torque sensing Hall and a torque sensing magnet. The torque sensing Hall and the torque sensing magnet are disposed in the thread-on freewheel sensing body relative fixing portion 101 and the thread-on freewheel sensing body relative rotating portion 102 respectively, or the torque sensing Hall and the torque sensing magnet are disposed in the thread-on freewheel sensing body relative rotating portion 102 and the thread-on freewheel sensing body relative fixing portion 101 respectively. As long as the torque sensing Hall and the torque sensing magnet move relative to each other slightly, the torque sensing Hall can sense a change in a magnetic field of the torque sensing magnet and convert the change into an electrical signal.

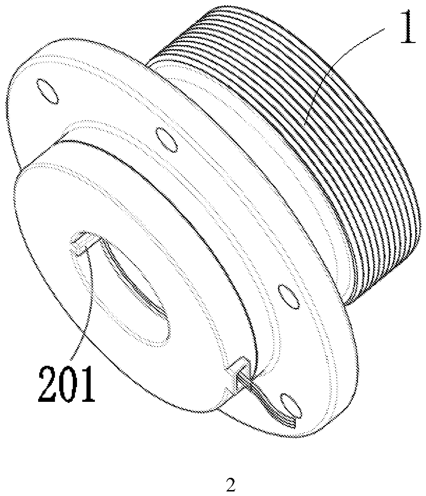

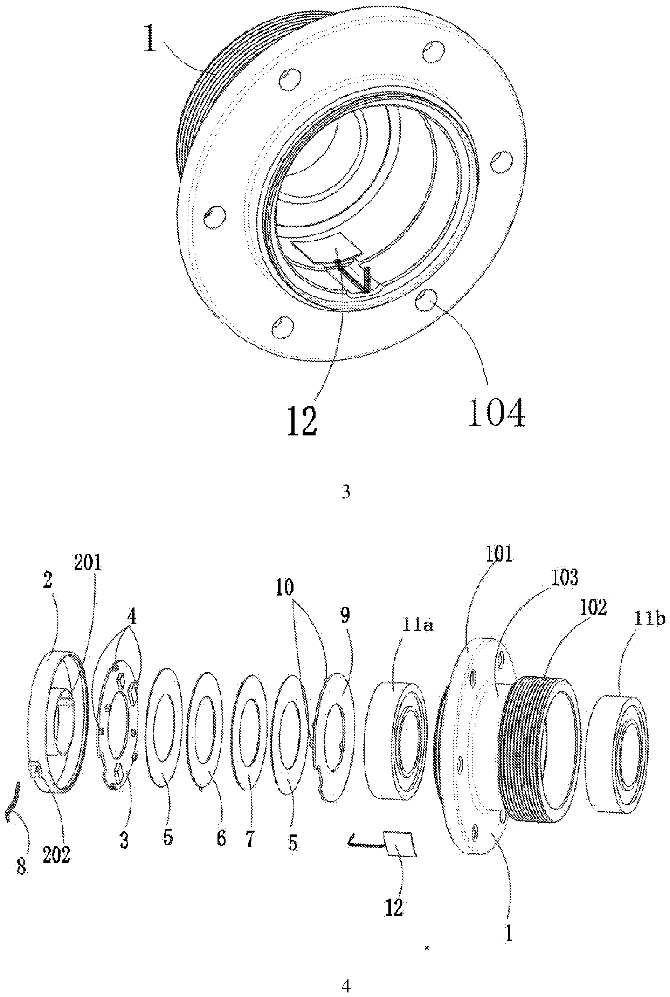

As shown in FIG. 2, the fixed housing 2 is an annular housing, and an inner surface of a hole of the annular housing mating with the axle shaft 20 is provided with a fixed housing positioning portion 201. The fixed housing positioning portion 201 is elongated in shape and configured to restrict rotation of the fixed housing 2. As shown in FIG. 4, an outer surface of the fixed housing 2 is provided with a signal line hole 202. A signal line 8 is electrically connected to an inductor primary control circuit 3 through the signal line hole 202.

The dynamic torque sensing device of the thread-on freewheel structure in the present embodiment further includes the inductor primary control circuit 3 and an inductor secondary control circuit 9.

The inductor primary control circuit 3 is fixed to the fixed housing 2 and provided with an infrared receiving element 4. The inductor secondary control circuit 9 is connected to the thread-on freewheel sensing body 1 and provided with an infrared emitting element 10. A signal is transmitted between the inductor primary control circuit 3 and the inductor secondary control circuit 9 through the infrared receiving element 4 and the infrared emitting element 10. The emitted light may be visible light or invisible light. In the present embodiment, the emitted light is the invisible light, that is, infrared light is used for data transmission, which is low in cost. The signal line 8 is electrically connected to the inductor primary control circuit 3.

In another embodiment, the dynamic torque sensing device of the thread-on freewheel structure includes a primary induction coil 6 and a secondary induction coil 7. The secondary induction coil 7 and the primary induction coil 6 are disposed adjacent to each other. The primary induction coil 6 is electrically connected to the inductor primary control circuit 3, and the secondary induction coil 7 is electrically connected to the inductor secondary control circuit 9. A wireless signal is transmitted between the primary induction coil 6 and the secondary induction coil 7. A power supply mode of the inductor secondary control circuit 9 includes that the inductor secondary control circuit 9 supplies electric energy through its own generator, a battery or wireless transmission. Alternatively, the inductor secondary control circuit 9 supplies the electric energy through wireless electric energy transmission between the secondary induction coil 7 and the primary induction coil 6. Specifically, the electric energy may be wirelessly transmitted through resonant coupling.

The dynamic torque sensing device of the thread-on freewheel structure in the present embodiment further includes an electromagnetic shield 5. Two electromagnetic shields 5 are respectively provided on an outer side of the secondary induction coil 7 and an outer side of the primary induction coil 6 and configured to respectively isolate the primary induction coil 6 and the secondary induction coil 7 from external electromagnetic interference, so as to improve energy transmission of the coils.

The sensor 12 is electrically connected to the inductor secondary control circuit 9. After the sensor 12 senses a torque signal of the thread-on freewheel sensing body 1, the inductor secondary control circuit 9 receives the torque signal, and then data transmission is performed through the infrared emitting element 10 and the infrared receiving element 4 or through the secondary induction coil 7 and the primary induction coil 6. After receiving the signal, the inductor primary control circuit 3 processes the data and then outputs the torque signal through the signal line 8.

An operating principle of the dynamic torque sensing device of the thread-on freewheel structure provided by the present application is described below. During riding, a user pedals to drive a crankset to rotate. The crankset drives the thread-on freewheel sensing body relative rotating portion 102 to rotate through a transmission structure such as a chain, a belt or a thread-on freewheel. The sensor 12 senses a displacement of the thread-on freewheel sensing body relative rotating portion 102 relative to the thread-on freewheel sensing body relative fixing portion 101 or the deformation of the thread-on freewheel sensing body transition portion 103, and then converts the displacement or the deformation into the torque signal of pedaling required by the user through the inductor secondary control circuit 9 and the inductor primary control circuit 3 in sequence.

The dynamic torque sensing device of the thread-on freewheel structure provided by the present application is designed as a modular device. The structure of the thread-on freewheel sensing body is improved so that the thread-on freewheel sensing body transition portion 103 is not affected by the weight of the human body, the weight of the whole vehicle, the chain tension and other external forces, and thus the device can truly reflect the strength of pedaling. The device has a simpler structure and can be assembled to a rear motor or a rear hub of a bicycle with higher versatility.

## Claims

1. A dynamic torque sensing device of a thread-on freewheel structure, comprising a thread-on freewheel sensing body (1), a fixed housing (2) and a sensor (12), wherein the thread-on freewheel sensing body (1) and the fixed housing (2) are rotatable relative to each other, and the sensor (12) is configured to sense a torque of the thread-on freewheel sensing body (1); and
**characterized in that** the thread-on freewheel sensing body (1) comprises a thread-on freewheel sensing body relative fixing portion (101), a thread-on freewheel sensing body relative rotating portion (102) and a thread-on freewheel sensing body transition portion (103); wherein the thread-on freewheel sensing body relative fixing portion (101), the thread-on freewheel sensing body transition portion (103) and the thread-on freewheel sensing body relative rotating portion (102) are sequentially arranged along an axial direction of the thread-on freewheel sensing body (1), and the thread-on freewheel sensing body transition portion (103) is configured to connect the thread-on freewheel sensing body relative fixing portion (101) to the thread-on freewheel sensing body relative rotating portion (102),
wherein an inner cavity of the thread-on freewheel sensing body relative fixing portion (101) is provided with a bearing (11a), and
wherein an inner cavity of the thread-on freewheel sensing body relative rotating portion (102) is provided with a bearing (11b), and an outer surface of the thread-on freewheel sensing body relative rotating portion (102) is provided with a thread to be connected to a thread-on freewheel.

2. The dynamic torque sensing device of the thread-on freewheel structure according to claim 1, wherein the thread-on freewheel sensing body relative fixing portion (101), the thread-on freewheel sensing body relative rotating portion (102) and the thread-on freewheel sensing body transition portion (103) are coaxial annular structures.

3. The dynamic torque sensing device of the thread-on freewheel structure according to claim 1, wherein the sensor (12) is a deformation sensing sensor which is disposed in the thread-on freewheel sensing body transition portion (103).

4. The dynamic torque sensing device of the thread-on freewheel structure according to claim 1, wherein the sensor (12) comprises a torque sensing Hall and a torque sensing magnet;
wherein the torque sensing Hall and the torque sensing magnet are disposed in the thread-on freewheel sensing body relative fixing portion (101) and the thread-on freewheel sensing body relative rotating portion (102) respectively, or the torque sensing Hall and the torque sensing magnet are disposed in the thread-on freewheel sensing body relative rotating portion (102) and the thread-on freewheel sensing body relative fixing portion (101) respectively.

5. The dynamic torque sensing device of the thread-on freewheel structure according to any one of claims 1 to 4, further comprising: an inductor primary control circuit (3) and an inductor secondary control circuit (9).

6. The dynamic torque sensing device of the thread-on freewheel structure according to claim 5, wherein the inductor primary control circuit (3) is fixed to the fixed housing (2) and provided with an infrared receiving element (4); and
the inductor secondary control circuit (9) is connected to the thread-on freewheel sensing body (1) and provided with an infrared emitting element (10).

7. The dynamic torque sensing device of the thread-on freewheel structure according to claim 5 or 6, further comprising: a primary induction coil (6) and a secondary induction coil (7), wherein the primary induction coil (6) is electrically connected to the inductor primary control circuit, and the secondary induction coil (7) is electrically connected to the inductor secondary control circuit (9).

8. The dynamic torque sensing device of the thread-on freewheel structure according to claim 7, further comprising: two electromagnetic shields (5), wherein the two electromagnetic shields (5) are disposed on an outer side of the secondary induction coil (7) and an outer side of the primary induction coil (6) respectively.

9. The dynamic torque sensing device of the thread-on freewheel structure according to claim 5, wherein the sensor (12) is electrically connected to the inductor secondary control circuit (9).

10. The dynamic torque sensing device of the thread-on freewheel structure according to claim 5, wherein an outer surface of the fixed housing (2) is provided with a signal line hole (202), and a signal line (8) is electrically connected to the inductor primary control circuit (3) through the signal line hole (202).

11. The dynamic torque sensing device of the thread-on freewheel structure according to claim 1, wherein two ends of the thread-on freewheel sensing body (1) are connected to an axle shaft (20) through the bearings (11a, 11b), and an inner surface of a hole of the fixed housing (2) mating with the axle shaft is provided with a fixed housing positioning portion (201).

## Patentansprüche

1. Dynamische Drehmomenterfassungsvorrichtung einer Gewindefreilaufstruktur, umfassend einen Gewindefreilauferfassungskörper (1), ein festes Gehäuse (2) und einen Sensor (12), wobei der Gewindefreilauferfassungskörper (1) und das feste Gehäuse (2) relativ zueinander drehbar sind und der Sensor (12) so konfiguriert ist, dass er ein Drehmoment des Gewindefreilauferfassungskörpers (1) erfasst;
**dadurch gekennzeichnet, dass** der Gewindefreilauferfassungskörper (1) einen Gewindefreilauferfassungskörper -Relativbefestigungsabschnitt (101), einen Gewindefreilauferfassungskörper -Relativdrehabschnitt (102) und einen Gewindefreilauferfassungskörper -Übergangsabschnitt (103) umfasst; wobei der Gewindefreilauferfassungskörper -Relativbefestigungsabschnitt (101), der Gewindefreilauferfassungskörper -Übergangsabschnitt (103) und der Gewindefreilauferfassungskörper -Relativdrehabschnitt (102) aufeinanderfolgend entlang einer axialen Richtung des Gewindefreilauferfassungskörpers (1) angeordnet sind, und wobei der Gewindefreilauferfassungskörper -Übergangsabschnitt (103) so konfiguriert ist, dass er den Gewindefreilauferfassungskörper -Relativbefestigungsabschnitt (101) mit dem Gewindefreilauferfassungskörper -Relativdrehabschnitt (102) verbindet,
wobei ein innerer Hohlraum des Gewindefreilauferfassungskörper - Relativbefestigungsabschnitts (101) mit einem Lager (11a) versehen ist, und
wobei ein innerer Hohlraum des Gewindefreilauferfassungskörper -Relativdrehabschnitts (102) mit einem Lager (11b) versehen ist und eine äußere Oberfläche des Gewindefreilauferfassungskörper -Relativdrehabschnitts (102) mit einem Gewinde versehen ist, das mit einem Gewinderadfreilauf zu verbinden ist.

2. Dynamische Drehmomenterfassungsvorrichtung der Gewindefreilaufstruktur nach Anspruch 1, wobei der Gewindefreilauferfassungskörper -Relativbefestigungsabschnitt (101), der Gewindefreilauferfassungskörper -Relativdrehabschnitt (102) und der Gewindefreilauferfassungskörper -Übergangsabschnitt (103) koaxiale ringförmige Strukturen sind.

3. Dynamische Drehmomenterfassungsvorrichtung der Gewindefreilaufstruktur nach Anspruch 1, wobei der Sensor (12) ein Deformationserfassungssensor ist, der in dem Gewindefreilauferfassungskörper -Übergangsabschnitt (103) angeordnet ist.

4. Dynamische Drehmomenterfassungsvorrichtung der Gewindefreilaufstruktur nach Anspruch 1, wobei der Sensor (12) einen drehmomenterfassenden Hall und einen drehmomenterfassenden Magnet umfasst;
wobei der drehmomenterfassende Hall und der drehmomenterfassende Magnet in dem Gewindefreilauferfassungskörper -Relativbefestigungsabschnitt (101) bzw. dem Gewindefreilauferfassungskörper -Relativdrehabschnitt (102) angeordnet sind, oder wobei der drehmomenterfassende Hall und der drehmomenterfassende Magnet in dem Gewindefreilauferfassungskörper -Relativdrehabschnitt (102) bzw. dem Gewindefreilauferfassungskörper -Relativbefestigungsabschnitt (101) angeordnet sind.

5. Dynamische Drehmomenterfassungsvorrichtung der Gewindefreilaufstruktur nach einem der Ansprüche 1 bis 4, umfassend ferner: einen primären Induktionsregelkreis (3) und einen sekundären Induktionsregelkreis (9).

6. Dynamische Drehmomenterfassungsvorrichtung der Gewindefreilaufstruktur nach Anspruch 5, wobei der primäre Induktionsregelkreis (3) an dem festen Gehäuse (2) befestigt und mit einem Infrarotempfangselement (4) versehen ist; und
wobei der sekundäre Induktionsregelkreis (9) mit dem Gewindefreilauferfassungskörper (1) verbunden und mit einem Infrarot-emittierenden Element (10) versehen ist.

7. Dynamische Drehmomenterfassungsvorrichtung der Gewindefreilaufstruktur nach Anspruch 5 oder 6, ferner umfassend: eine primäre Induktionsspule (6) und eine sekundäre Induktionsspule (7), wobei die primäre Induktionsspule (6) elektrisch mit dem primären Induktionsregelkreis verbunden ist, und die sekundäre Induktionsspule (7) elektrisch mit dem sekundären Induktionsregelkreis (9) verbunden ist.

8. Dynamische Drehmomenterfassungsvorrichtung der Gewindefreilaufstruktur nach Anspruch 7, ferner umfassend zwei elektromagnetische Abschirmungen (5), wobei die beiden elektromagnetischen Abschirmungen (5) an einer Außenseite der sekundären Induktionsspule (7) bzw. einer Außenseite der primären Induktionsspule (6) angeordnet sind.

9. Dynamische Drehmomenterfassungsvorrichtung der Gewindefreilaufstruktur nach Anspruch 5, wobei der Sensor (12) elektrisch mit dem sekundären Induktionsregelkreis (9) verbunden ist.

10. Dynamische Drehmomenterfassungsvorrichtung der Gewindefreilaufstruktur nach Anspruch 5, wobei eine Außenfläche des festen Gehäuses (2) mit einem Signalleitungsloch (202) versehen ist und eine Signalleitung (8) durch das Signalleitungsloch (202) elektrisch mit dem primären Induktionsregelkreis (3) verbunden ist.

11. Dynamische Drehmomenterfassungsvorrichtung der Gewindefreilaufstruktur nach Anspruch 1, wobei zwei Enden des Gewindefreilauferfassungskörpers (1) über die Lager (11a, 11b) mit einer Achswelle (20) verbunden sind, und wobei eine Innenfläche eines Lochs des festen Gehäuses (2), das mit der Achswelle zusammenpasst, mit einem Positionierungsabschnitt (201) des festen Gehäuses versehen ist.

## Revendications

1. Dispositif de détection de couple dynamique pour une structure à roue libre filetée, comprenant un corps de détection de roue libre filetée (1), un boîtier fixe (2) et un capteur (12), dans lequel le corps de détection de roue libre filetée (1) et le boîtier fixe (2) sont rotatifs l'un par rapport à l'autre, et le capteur (12) est configuré pour détecter un couple du corps de détection de roue libre filetée (1) ; et
**caractérisé en ce que** le corps de détection de roue libre fileté (1) comprend une portion de fixation relative de corps de détection de roue libre filetée (101), une portion de rotation relative de corps de détection de roue libre filetée (102) et une portion de transition de corps de détection de roue libre filetée (103) ; dans lequel la portion de fixation relative de corps de détection de roue libre filetée (101), la portion de transition de corps de détection de roue libre filetée (103) et la portion de rotation relative de corps de détection de roue libre filetée (102) sont disposées par séquence dans une direction axiale du corps de détection de roue libre filetée (1), et la portion de transition de corps de détection de roue libre filetée (103) est configurée pour relier la portion de fixation relative de corps de détection de roue libre filetée (101) à la portion de rotation relative de corps de détection de roue libre filetée (102),
dans lequel une cavité intérieure de la portion de fixation relative de corps de détection de roue libre filetée (101) est pourvue d'un roulement (11a), et
dans lequel une cavité intérieure de la portion de rotation relative de corps de détection de roue libre filetée (102) est pourvue d'un roulement (11b), et une surface extérieure de la portion de rotation relative de corps de détection de roue libre filetée (102) est pourvue d'un filetage à relier à une roue libre filetée.

2. Dispositif de détection de couple dynamique pour la structure à roue libre filetée selon la revendication 1, dans lequel la portion de fixation relative de corps de détection de roue libre filetée (101), la portion de rotation relative de corps de détection de roue libre filetée (102) et la portion de transition de corps de détection de roue libre filetée (103) sont des structures annulaires coaxiales.

3. Dispositif de détection de couple dynamique pour la structure à roue libre filetée selon la revendication 1, dans lequel le capteur (12) est un capteur de détection de déformation qui est disposé dans la portion de transition de corps de détection de roue libre filetée (103).

4. Dispositif de détection de couple dynamique pour la structure à roue libre filetée selon la revendication 1, dans lequel le capteur (12) comprend un capteur Hall de détection de couple et un aimant de détection de couple ;
dans lequel le capteur Hall de détection de couple et l'aimant de détection de couple sont disposés dans la portion de fixation relative de corps de détection de roue libre filetée (101) et la portion de rotation relative de corps de détection de roue libre filetée (102), respectivement, ou le capteur Hall de détection de couple et l'aimant de détection de couple sont disposés dans la portion de rotation relative de corps de détection de roue libre filetée (102) et la portion de fixation relative de corps de détection de roue libre filetée (101), respectivement.

5. Dispositif de détection de couple dynamique pour la structure à roue libre filetée selon l'une quelconque des revendications 1 à 4, comprenant en outre : un circuit primaire de commande d'inductance (3) et un circuit secondaire de commande d'inductance (9).

6. Dispositif de détection de couple dynamique pour la structure à roue libre filetée selon la revendication 5, dans lequel le circuit primaire de commande d'inductance (3) est fixé au boîtier fixe (2) et pourvu d'un élément récepteur infrarouge (4) ; et
le circuit secondaire de commande d'inductance (9) est relié au corps de détection de roue libre filetée (1) et pourvu d'un élément émetteur infrarouge (10).

7. Dispositif de détection de couple dynamique pour la structure à roue libre filetée selon la revendication 5 ou 6, comprenant en outre : une bobine d'induction primaire (6) et une bobine d'induction secondaire (7), dans lequel la bobine d'induction primaire (6) est connectée électriquement au circuit primaire de commande d'inductance, et la bobine d'induction secondaire (7) est connectée électriquement au circuit secondaire de commande d'inductance (9).

8. Dispositif de détection de couple dynamique pour la structure à roue libre filetée selon la revendication 7, comprenant en outre : deux boucliers électromagnétiques (5), dans lequel les deux boucliers électromagnétiques (5) sont disposés sur un côté extérieur de la bobine d'induction secondaire (7) et sur un côté extérieur de la bobine d'induction primaire (6) respectivement.

9. Dispositif de détection de couple dynamique pour la structure à roue libre filetée selon la revendication 5, dans lequel le capteur (12) est connecté électriquement au circuit secondaire de commande d'inductance (9).

10. Dispositif de détection de couple dynamique pour la structure à roue libre filetée selon la revendication 5, dans lequel une surface extérieure du boîtier fixe (2) est pourvue d'un trou de ligne de signal (202), et une ligne de signal (8) est connectée électriquement au circuit primaire de commande d'inductance (3) par le trou de ligne de signal (202).

11. Dispositif de détection de couple dynamique pour la structure à roue libre filetée selon la revendication 1, dans lequel deux extrémités du corps de détection de roue libre filetée (1) sont reliées à un arbre d'essieu (20) par l'intermédiaire des roulements (11a, 11b), et une surface intérieure d'un trou du boîtier fixe (2) s'adaptant à l'arbre d'essieu est pourvue d'une portion de positionnement de boîtier fixe (201).
